# EUROPEAN PATENT SPECIFICATION

(11) **EP 4 221 905 B1**
(45) Date of publication and mention of the grant of the patent: **16.10.2024**
(21) Application number: 21794628.4
(22) Date of filing: 28.09.2021
(51) Int. Cl.: B08B 9/027, F16L 41/04

(54) **CLEANING BELL FOR PIPES**
REINIGUNGSGLOCKE FÜR ROHRE
CLOCHE DE NETTOYAGE POUR TUYAUX

(30) Priority: 01.10.2020 IT 202000023221
(43) Date of publication of application: 09.08.2023
(73) Proprietor: Ravetti S.r.l., 15040 Frassineto PO (AL) (IT)
(72) Inventor: RAVETTI, Roberto, 15040 Frassineto Po (AL) (IT)
(74) Representative: Simino, Massimo
(86) International application number: PCT/IB2021/058849
(87) International publication number: WO 2022/070036

(56) References cited:
- EP-B1- 2 372 216
- CN-A- 103 912 758
- FR-A1- 2 812 709
- KR-B1- 101 949 939
- RU-C1- 2 701 811
- US-A- 3 463 195
- US-A- 3 842 864

## Description

### Field of the invention

The present invention relates to a cleaning bell for tubular pipes as defined in the preamble of claim 1, more specifically a cleaning bell for pipes carrying fluids, gases and the like.

For simplicity, the present disclosure is made by illustrative way and without limitation with particular reference to a cleaning bell for use on tubular pipes of a gas distribution network, but the invention can also relate to pipes intended to be used for the passage of fluids of different nature, for example water or crude oil.

### Background of the invention

In the field of gas distribution networks, works are often required at a location to create a new branch or service a section of deteriorated pipe.

Notwithstanding the need to guarantee the safety of the works, avoiding undesired leakage of gas or other fluid, the need is also strongly felt to perform works without necessarily interrupting the passage and distribution of gas through the tubular pipe, as set forth in the prior document EP 2372216 B1.

This result is currently achieved by applying a valve to the exterior of the tubular pipe, which is sealingly connected to the surface of the tubular pipe by means of a connecting pipe. This connecting pipe projects from a first end of the valve body and has an end distal from the valve body which:
- is shaped to match the curvilinear shape of the outer wall of the tubular pipe and
- is sealingly connected, for example by welding, to the surface of the tubular pipe.

Furthermore, the valve comprises a second end which is conveniently shaped, for example by means of a connecting flange, to interchangeably receive an accessory such as a drilling bell, a cleaning bell and others.

Once a predetermined accessory has been sealingly applied to the aforementioned second end of the valve, by opening the valve shutter means a passage is opened for fluid communication of the accessory with the aforementioned connecting pipe, and conversely by closing the shutter means, the aforementioned fluid communication is interrupted.

Generally, the procedure starts by applying a drilling accessory to the aforementioned second end of the valve whereby, after opening the valve shutter means, the drilling means are moved forward until they reach and penetrate the surface of the tubular pipe.

Once the desired hole has been made in the tubular pipe, the drilling means are retracted, the valve shutter means are closed and the drilling accessory is replaced with a cleaning accessory comprising a bell provided with cleaning accessories. This component is generally called "cleaning bell" and, when required, has a transparent portion for visual inspection of the hole that has been previously drilled.

Then, once the valve shutter means has been opened, the aforementioned cleaning accessories are pushed axially into the aforementioned connecting pipe and further into the tubular pipe, through the hole that has been drilled.

The travel of the cleaning accessories into the tubular pipe continues until such cleaning accessories contact the inner wall of the tubular pipe itself.

Then, the cleaning accessories are moved, generally slidingly rocked back and forth with an oscillating movement, against the aforementioned inner wall of the tubular pipe in order to move and/or collect any chips or scraps deriving from the previous drilling operation. Also, the cleaning accessories are used to remove chips or scraps from the inner wall of the aforementioned connecting pipe.

It shall be noted in this respect that the removal of chips and scraps is necessary, or highly recommended, to prevent such chips or scraps from hindering a perfect seal of a shutter to be placed inside the tubular pipe or from being entrained by the gas or other fluid inside the tubular pipe, thus interfering with other parts of the gas distribution network or with its components.

It should be noted that the cleaning accessories are inserted into the tubular pipe by placing them at one end of an operating rod. This operating rod is sealing slid, with the interposition of sealing means, into a through hole in the upper part of the cleaning bell.

Then, the cleaning accessories carried by the free end of the aforementioned operating rod are introduced by externally acting on the upper end of the operating rod that projects out of the cleaning bell, said free upper end of the operating rod being specially equipped with a handle or other gripping/operating appendage.

Thus, the insertion and later oscillation of the rod, i.e. the change of its tilt relative to the body of the cleaning bell, are carried out manually by an operator.

It should be understood that the insertion of the cleaning accessories into the tubular pipe, until they reach the inner wall of the latter, requires some physical effort by the operator because of the pressure difference between the inside of the pipe, containing pressurized gas, and atmospheric pressure outside the cleaning bell.

As a result, the operator is required to exert a fairly strong force, even in the order of 30 kg. to keep the operating rod fully inserted deep inside the tubular pipe while performing movements to oscillate/tilt the rod with respect to the cleaning bell, to effectively move the cleaning accessories and collect chips or scraps deriving from the drilling operation.

In light of the above, there is an apparent strong need to be able, after the drilling step on the pipe, to clean the inside of the tubular pipe from chips and scraps with the utmost accuracy and with less effort by the operator, and hence more conveniently, for a more successful operation.

### Summary of the invention

This invention is based on the problem of providing a cleaning bell for performing chip and/or scrap removal operations inside a tubular pipe, which has such structural and functional characteristics as to fulfill the above need, while obviating the above prior art drawbacks.

This problem is solved by a cleaning bell as defined in claim 1.

In another aspect, the problem is also solved by a valve as defined in claim 10.

### Brief description of the figures

Further characteristics and advantages of the cleaning bell of the present invention will be apparent from the following description of a few preferred embodiments thereof, which are given by way of illustration and without limitation with reference to the accompanying figures, in which:
- Figure 1 shows a perspective view of a tubular pipe section with which a valve comprising a cleaning bell of the invention is associated;
- Figure 2 shows a lateral plan view of the tubular pipe section and its valve with the cleaning bell of Figure 1;
- Figure 3 shows a sectional view as taken along the line III - III of Figure 2;
- Figure 4 is a perspective view of the cleaning bell of the valve of Figure 1 with cleaning accessories;
- Figure 5 shows a sectional view of the cleaning bell of Figure 4;
- Figure 6 shows a perspective view of the cleaning bell of the valve of Figure 1 with different cleaning accessories, and
- Figure 7 shows a sectional view of the cleaning bell of Figure 6.

### Detailed description of invention

Referring to the accompanying drawings, a cleaning bell 1 for removing scraps from tubular pipes 30 for transport and distribution of fluids is generally designated by numeral 1.

For simplicity, while reference will be made hereinafter by illustrative way and without limitation to a cleaning bell 1 for use on tubular pipes 30 of a gas transport or distribution network, the same considerations and characteristics will also apply to pipes intended to be used for the passage of fluids of different nature, for example water or crude oil.

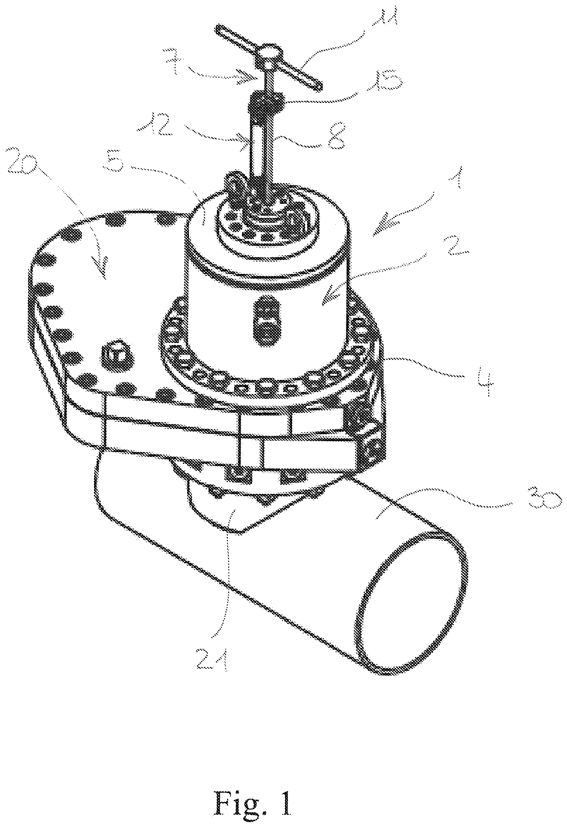

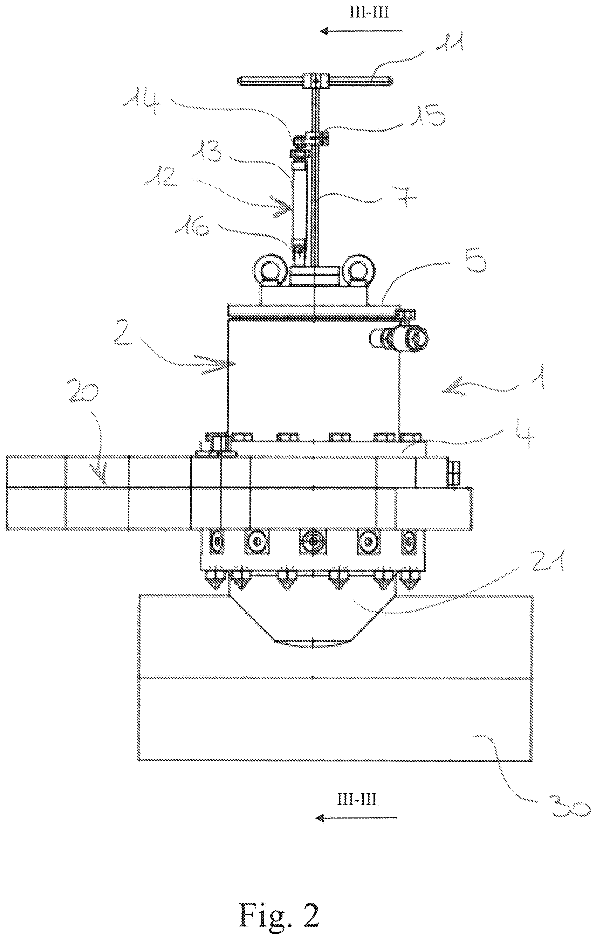

In particular, the cleaning bell 1 is designed to be applied to the valve body of a valve 20 which, according to the embodiment of Figures 1 and 2, is a substantially flat valve.

Namely, the valve 20 for tubular pipes comprises:
- a valve body in which a shutter seat is obtained which identifies a passage for fluids;
- a shutter interlocked in closing and opening to said shutter seat;
- a fitting 21 projecting from said body and in fluid communication with said shutter seat and
- a cleaning bell 1 applied in a fluid-tight manner to said valve body and in fluid communication with said shutter seat.

The fitting 21 projects from the body of the valve 20 and terminates with an end that is shaped to match the curvilinear shape of the outer wall of the tubular pipe and is sealingly connected, for example by welding, to the surface of the tubular pipe 30.

Concerning the tubular pipe 30, the valve 20 and the cleaning bell 1, it shall be noted that these parts are preferably made of a metal material.

It should be noted that, as further explained hereinafter, the fluid passage identified by the aforementioned shutter seat in the valve body 20 and the aforementioned fitting 21 are positioned so as to be aligned with the axis X-X of the cleaning bell 1.

Also, it should be noted that said shutter, when in the open position, is position so as to not overlap along the longitudinal axis X-X and obstruct the fluid passage of the shutter seat, to thereby allow insertion of cleaning accessories into said shutter seat of the valve 20.

The cleaning bell 1 comprises a bell-shaped body 2 comprising an internal cavity 3 delimited by lateral walls (in the illustrated example a single tubular lateral wall) extending in an axial direction X-X between opposite head ends 4, 5;

A first head end 4 of the bell-shaped body 2 is open and is intended in use to be removably connected in a sealed manner to a corresponding portion of the body of the aforementioned valve 20 in substantial correspondence with the aforementioned shutter seat and with the fluid passage identified thereby.

In short, the aforementioned shutter seat is positioned coaxially with the axis X-X of the bell-shaped body 2 or at least is positioned at least partially along the extension of the axis X-X of the bell-shaped body 2.

A second opposite head end 5 of said bell-shaped body 2 is closed by a head wall 5 having a through passage 6.

The cleaning bell 1 also comprises an operating rod 7 having a stem 8 slidably inserted in the aforementioned through passage 6 with interposition of sealing means suitable to allow said stem 8 to slide with respect to said head wall 5 of the bell-shaped body 2, while ensuring a fluid pressure seal.

The cleaning bell 1 also comprises cleaning accessories 10 supported by a first end 7a of said operating rod 7.

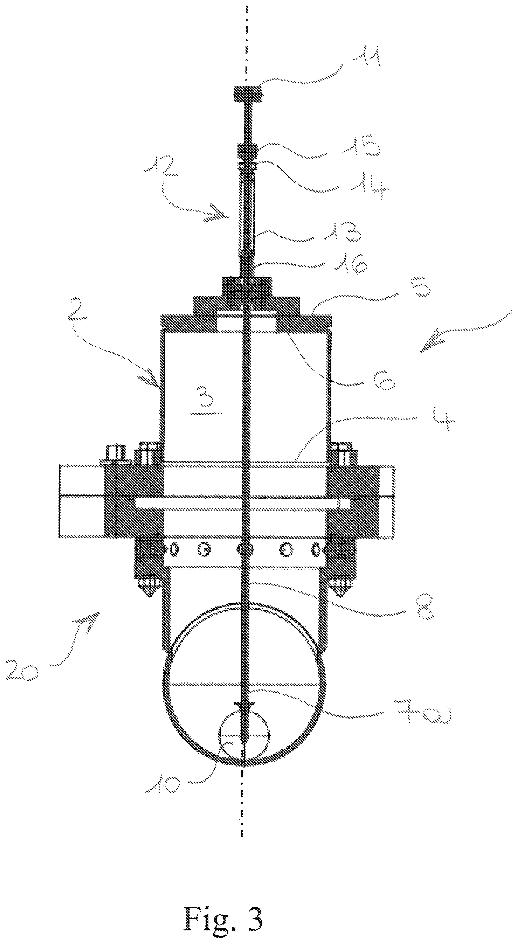

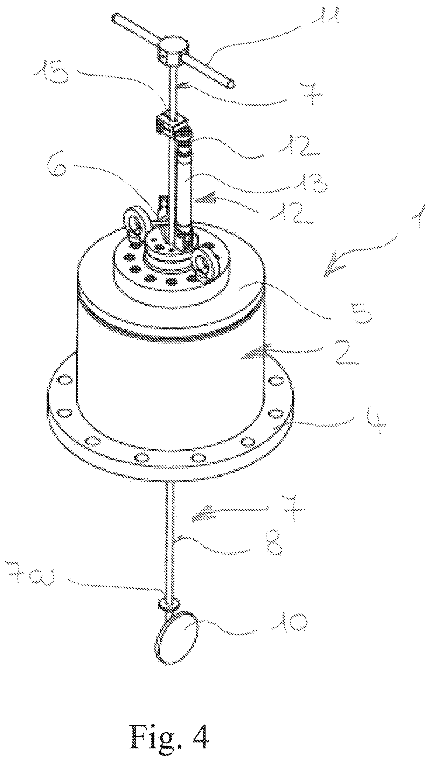

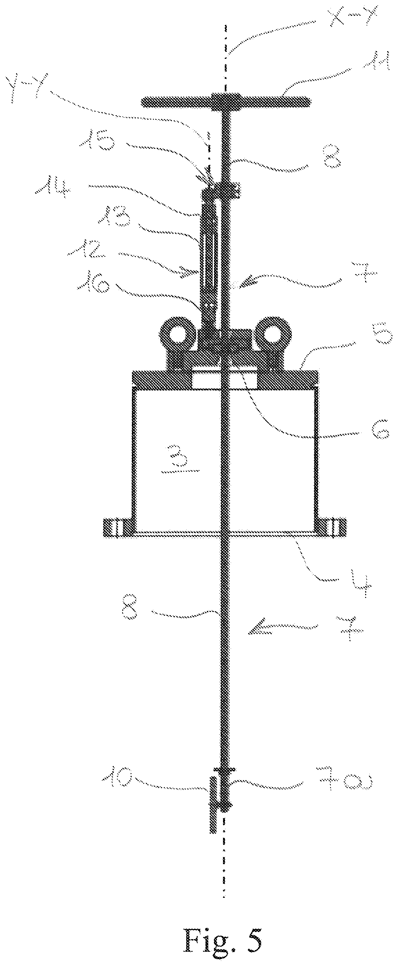

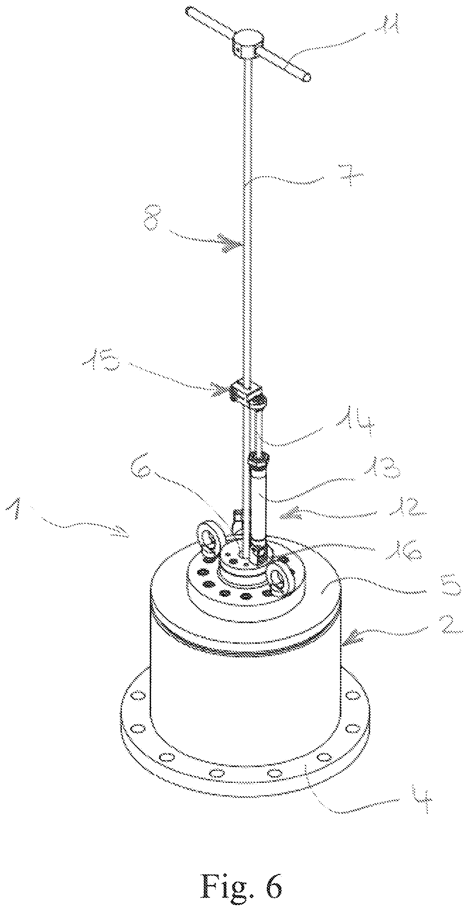

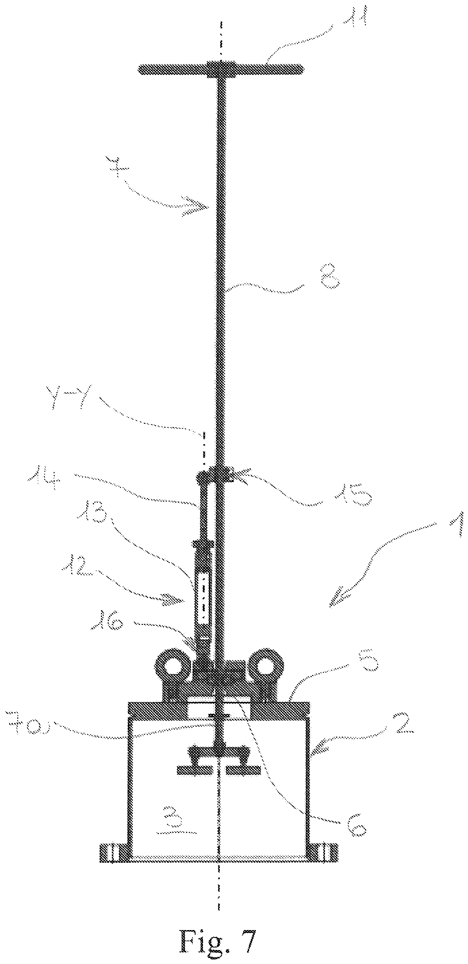

These cleaning accessories 10 supported by said operating rod 7 may be of various types as needed, and may be embodied, for example, by a circular brush (as shown in Figures 3, 4 and 5) or one or more magnets (as shown in Figures 6 and 7).

It should be noted that while Figures 1 and 2 show a general-purpose accessory 1, the remaining figures show the cleaning bell 1 of the invention according to two different embodiments which only differ from each other in the type of cleaning accessory 10 in use, the circular brush in Figures 3, 4 and 5 and magnetic means in Figures 6 and 7, with no other difference in the remaining components of the two illustrated cleaning bells 1.

As shown in the figures, the cleaning bell 1 also comprises grip means 11 connected to a point of the stem 8 of the operating rod 7 distal from the aforementioned first end 7a. These grip means 11, which in the example consist of a cross member integrally connected at a free end of the stem 8 of the operating rod 7, are used to move the operating rod 7 from the outside of the bell-shaped body 2, to push such rod deeper into the bell-shaped body 2.

More in detail, the operating rod 7 can be operated manually to reversibly switch:
- from a rearward stroke end position in which the aforementioned first end 7a, with which the cleaning accessories are connected, is in said internal cavity 3 of said bell-shaped body 2 and the grip means 11 are at the maximum possible distance from the head wall 5 of the bell-shaped body 2
- to an advanced position in which the first end 7a, with the cleaning accessories 10 supported thereby, overcomes the aforementioned first head end 4 of the bell-shaped body 2 and the grip means 11 are closer to the head wall 5 of the bell-shaped body 2.

Advantageously, the cleaning bell 1 comprises a pneumatic cylinder 12 comprising a first part 13 and a second part 14 mutually coupled to each other in a sliding manner along a predetermined axial direction YY to reversibly switch from a position stroke end contracted to an extended stroke end position in which opposed and respective free ends of the first part 13 and of the second part 14 are closer together and, respectively, further apart from each other.

Such pneumatic cylinder 12 is loaded with a compressible fluid, for example a gas or air, that acts between said first part 13 and said second part 14 to push said first part 13 and said second part 14 with a predetermined elastic load into said rearward stroke end position in which the opposed free ends of the first part 13 and of the second part 14 of the pneumatic cylinder 12 are at a minimum distance from each other.

It should be also noted that the aforementioned first part 13 of the pneumatic cylinder 12 is secured by means of connection means 16 to the outside of said bell-shaped body 2.

Preferably, the aforementioned connection means 16 provide a connection between a head end of the first part 13 of the pneumatic cylinder 12 and the head wall 5 of the bell-shaped body 2.

Preferably, these connection means 16 make an articulated connection between said first part 13 of the pneumatic cylinder 12 and the bell-shaped body 2, to allow said pneumatic cylinder 12 to be able to tilt with respect to said bell-shaped body 2 to follow the inclinations/oscillations imparted to the stem 8 of the operating rod 7.

Preferably, these connecting means 16 comprise a fork comprising a base secured to the head wall 5 and two facing tabs to support a rotation pin projecting from the head end of the first part 13 of the pneumatic cylinder 12, where said rotation pin is supported free in rotation by said fork fins and/or by said head end of said first part 13 of the pneumatic cylinder 12.

According to the preferred embodiment as shown in the figures, the aforementioned first part 13 of the pneumatic cylinder 12 is fixed to the head wall 5 of the bell-shaped body 2, so that the pneumatic cylinder 12 is extended with its axis Y-Y parallel to the axis X-X of the operating rod 8 and of the bell-shaped body 2.

The cleaning bell 1 comprises releasable engagement means 15 to constrain in translation the second part 14, preferably the free end thereof, of the pneumatic cylinder 12 to a portion of the stem 8 of the operating rod 8, specifically a portion of the stem 8 that projects from the aforementioned through passage 6 towards the outside of the bell-shaped body 2. Thus, when the operating rod 7 is in the aforementioned advanced position (see Figures 3, 4 and 5) and, at the same time, said second part 14 of said pneumatic cylinder 12 is constrained by the aforementioned releasable engagement means 15 to the operating rod 7, the pneumatic cylinder 12 opposes, with a predetermined elastic load, a displacement of the operating rod 7 toward the aforementioned rearward stroke end position.

Preferably, the aforementioned releasable engagement means 15 comprise a clamp which is:
- integrally connected with the second part 14 of the pneumatic cylinder 12 and
- adapted to be screwed onto the stem 8 of the operating rod 7 at the desired point, and for this purpose the operating rod 7 will be simply slid into the through passage 6 and stopped at the desired point before tightening the clamping screw of the clamp 15.

Preferably, the aforementioned releasable engagement means 15 can lock the operating rod 7, thereby allowing said operating rod 7 to still rotate about its own axis X-X, and hence relative to the bell-shaped body 2 so that, in use the operator will be able to change the angular orientation of the cleaning accessories 10 carried by the free end 7a of the operating rod 7.

Preferably, the first head end 4 of the bell-shaped body 2 comprises an outer annular flange having holes for fixation to a corresponding flange of the valve body 20.

Due to the above, when the cleaning bell is applied to a valve 20 associated with a tubular pipe 30 of a fluid distribution network, in which a hole has been made at the inner portion of the fitting 21, the operating rod 7 is initially in the aforementioned rearward stroke end position.

When the operator is required to remove the chips or scraps resulting from the drilling operation on the wall of the tubular pipe 30, and possibly also the coupon, if it has not been recovered during the drilling operation, he/she acts on the grip means 11 at the top of the stem 8 of the operating rod 7, to insert of the operating rod 7 deeper into the bell-shaped body 2 and the valve 20.

This insertion operation is carried out with some effort of the operator, since the operator has to overcome the force tending to move the operating rod toward the aforementioned rearward position due to the greater pressure of the gas inside the tubular pipe (for example 25 bar) as compared with the atmospheric pressure outside the cleaning bell.

The insertion of the rod 7 into he cleaning bell causes the cleaning accessories 10 carried by the operating rod 7:
- to move past the first end 4 of cleaning bell 1;
- to fit into the valve body 20;
- to move through and past the fluid passage identified by the shutter seat while the valve 20 is in the open valve configuration with the aforementioned fluid passage clear of the shutter;
- to move through and past the fitting existing between the valve 20 and the pipe 30 and, eventually,
- to fit into the tubular pipe 30 through the hole that has been previously drilled.

The insertion stroke of the operating rod 7 stops when the cleaning accessories 10 carried by the free end 7a of the operating rod 7 abut the inner wall of the tubular pipe 30, as shown in Figure 2.

Then, the operator can start to perform move the operating rod 7 as usual, rotating it about its own axis X-X and oscillating/tilting it relative to the bell-shaped body 2, in particular relative to the aforementioned through passage 6.

Optionally, the operator may clean or remove chips and scraps also at the fitting 21.

Nevertheless, in doing so, the operator should continue to exert the necessary force, (for example about 30 kg if gas pressure in the tubular pipe is 25 bar) which is not easy.

However, according to the invention, once the aforementioned condition of maximum insertion of the operating rod 7 has been reached (see Figure 2), the operator may tighten the clamping screw of the clamp 15, thereby rigidly joining the operating rod 7 and the second part of the pneumatic cylinder 12 in translation in the direction X-X.

By this arrangement, the ejection force exerted on the operating rod 7 by the pressurized gas in the tubular pipe 30 is totally or partially absorbed and counteracted by the action of the pneumatic cylinder 12 which, as described above, operably pushes with a predetermined elastic load the first part 13 and the second part 14 to the aforementioned rearward stroke end position in which the opposed free ends of the first part 13 and the second part 14 of the pneumatic cylinder 12 are at a minimum distance from each other.

Thus, the operator is totally or partially relieved of the task of exerting the aforementioned force to keep the operating rod 7 inserted in the tubular duct 30, and may focus on the rotary and oscillatory movements required for proper removal of the drilling chips and scraps from the bottom of the tubular pipe.

It should be noted that, by suitably adjusting the pressure of the fluid inside the pneumatic cylinder 12, the assistance provided by such pneumatic cylinder to counteract the ejection force caused by gas pressure inside the tubular pipe 30 may be adjusted.

In this respect, it should be noted that, advantageously, the cylinder 12 is a cylinder filled with compressible fluid, so that as the distance between the opposed free ends of the first part 13 and of the second part 14 of the pneumatic cylinder 12 increases, gas pressure inside the pneumatic cylinder 12, and hence the ejection force that this pneumatic cylinder is able to counteract, also increase.

In view of the above, the pressure inside the pneumatic cylinder 12 should be preferably adjusted to generate a counteracting force which is slightly less than the ejection force exerted on the operating rod 7 by the pressurized gas in the tubular pipe 30. so that the opposed free ends of the first part 13 and the second part 14 of the pneumatic cylinder 12 will move away from each other by a few centimeters before being able to counteract such ejection force. This can provide an elastically damped system, with a very limited stroke of the operating rod 7 during the cleaning operations carried out by the operator.

Possibly, if the operator has to clean the fitting 21, the operator may tighten the clamping screw of the clamp 15, to rigidly join the operating rod 7 and the second part of the pneumatic cylinder 12 in translation in the direction X-X, when the cleaning accessories 10 are at the fitting 10.

At the end of the cleaning operation, or when changing the cleaning accessory, the clamping screw of the clamp 15 will be simply released and the ejection movement of the operating rod 7 to the aforesaid rearward stroke end position will be controlled. Once the stroke end position of the rod has been reached, the valve shutter 20 may be moved to the closed position and the cleaning bell 1 of the valve 20 may be disassembled.

It should be noted that, optionally, the cleaning bell 1 may comprise a porthole, a window or a transparent portion to allow the operator to visually inspect the inside of the tubular pipe 30 at the hole that has been drilled or during chip or scrap removal operations.

It will be appreciated from the above that the cleaning bell of the present invention fulfills the aforementioned need and also obviates prior art drawbacks as set out in the introduction of this disclosure. That is, when cleaning the tubular pipe from drilling chips and scraps, the operator is relieved of the effort of keeping the operating rod inserted in the tubular pipe to counteract the ejection pressure caused by the pressure inside the tubular pipe being higher than the atmospheric pressure outside the cleaning bell, whereby the operator may only focus on imparting the rotary and oscillatory movements to the operating rod as required to ensure optimal removal of the chips and scraps from the inside of the tubular pipe.

One more advantage of the cleaning bell of the present invention is the possibility of adjusting the counteracting force that can be exerted by the pneumatic cylinder on the operating rod to counteract the aforementioned ejection force caused by overpressure.

A further advantage of the cleaning bell of the present invention is its structural and functional simplicity.

Yet another advantage is the possibility of implementing the inventive solution even on existing bells with simple modifications.

Those skilled in the art will obviously appreciate that a number of changes and variants may be made to the cleaning bell as described hereinbefore, in response to specific requirements, without departure from the scope of the invention, as defined in the following claims.

Thus, for example, while the closed head wall of the bell-shaped body 2 has been described for simplicity as a continuous wall having the aforementioned through passage for the operating rod, it may actually have a more complex structure, with elements defining sealing flanges, the central one having the through passage for the operating rod, applied to the bell-shaped body, as shown in the accompanying figures.

## Claims

1. **Cleaning bell** (1) to remove scraps from tubular pipes for the transport and/or distribution of fluids, wherein:
- said cleaning bell (1) comprises a bell-shaped body (2) comprising an internal cavity (3) delimited by lateral walls extending in an axial direction (X-X) between opposite head ends (4, 5);
- a first head end (4) of said bell-shaped body (2) is open and is intended in use to be removably connected in a sealed manner to a corresponding portion of the body of a valve (20) in correspondence with shutter means of said valve;
- a second head end (5) of said bell-shaped body (2) is closed by a head wall (5) comprising a through passage (6);
- said cleaning bell (1) also comprises an operating rod (7) having a stem (8) slidably inserted in said through passage (6) with interposition of sealing means suitable to allow said stem (8) sliding with respect to said second head end (5) of the bell-shaped body (2) ensuring a fluid pressure seal;
- said cleaning bell (1) comprises cleaning accessories (10) supported by a first end (7a) of said operating rod (7) and
- said cleaning bell (1) comprises grip means (11) connected to a point of the stem (8) of said operating rod (7) distal from said first end (7a) to move said operating rod (7) from outside of said bell-shaped body (2),
wherein said operating rod (7) can be operated manually to reversibly switch:
• from a rearward stroke end position wherein said first end (7a) is positioned in said internal cavity (3) of said bell-shaped body (2) and said grip means (11) are at the maximum distance from said second end head (5) of the bell body (2)
• to an advanced position wherein said first end (7a) overcomes said first head end (4) of said bell-shaped body (2) and said grip means (11) are closer to said second head end (5) of said bell-shaped body (2),
**characterized in that:**
- said cleaning bell (1) comprises a pneumatic cylinder (12) comprising a first part (13) and a second part (14) mutually coupled to each other in a sliding manner along a predetermined axial direction (YY) to reversibly switch from a position stroke end contracted to an extended stroke end position wherein opposite and respective free ends of said first part (13) and of said second part (14) are closer together and, respectively, further apart from each other;
- said pneumatic cylinder (12) is loaded with a compressible fluid that acts between said first part (13) and said second part (14) to push said first part (13) and said second part (14) with a predetermined elastic load into said rearward stroke end position wherein the opposite free ends of said first part (13) and of said second part (14) of said pneumatic cylinder (12) are at a minimum distance from each other;
- said first part (13) of said pneumatic cylinder (12) is secured by means of connection (16) to the outside of said bell-shaped body (2) and
- said cleaning bell (1) comprises releasable engagement means (15) to constrain in translation said second part (14) of said pneumatic cylinder (12) to a portion of the stem (8) of said operating rod (7) projecting from said through passage (6) towards the outside of said bell-shaped body (2),
so that when said operating rod (7) is in said forward position and said second part (14) of said pneumatic cylinder (12) is constrained to said operating rod (7), said pneumatic cylinder (12) contrasts with a predetermined load elastic a displacement of said operating rod (7) from said advanced position towards said rear end position.

2. Cleaning bell (1) according to claim 1, wherein said releasable engagement means (15) comprise a clamp that can be screwed onto the stem (8) of said operating rod.

3. Cleaning bell (1) according to claim 1 or 2, wherein said releasable engagement means (15) allow said operating rod (7) to be able to rotate around its own axis (X-X) with respect to the bell body (2).

4. Cleaning bell (1) according to any one of claims 1 to 3, wherein said connection means (16) make a connection between a head end of said first part (13) of said pneumatic cylinder (12) and said head wall (5) of said bell-shaped body (2).

5. Cleaning bell (1) according to any one of claims 1 to 4, wherein said connection means (16) make an articulated connection between said first part (13) of said pneumatic cylinder (12) and said bell body (2), to allow said pneumatic cylinder (12) to be able to tilt with respect to said bell-shaped body (2) to follow the inclinations/oscillations imparted to the stem (8) of said operating rod (7).

6. Cleaning bell (1) according to claims 4 and 5, wherein said connecting means (16) comprise a fork comprising a base secured to said head wall (5) and two facing tabs to support a rotation pin projecting from the head end of said first part (13) of said pneumatic cylinder (12), wherein said rotation pin is supported free in rotation by said fork fins and/or by said head end of said first part (13) of said pneumatic cylinder (12) .

7. Cleaning bell (1) according to any one of claims 1 to 6, wherein said grip means (11) comprise a cross member integrally connected at a free end of said stem (8) .

8. Cleaning bell (1) according to any one of claims 1 to 7, wherein said first head end (4) of said bell-shaped body (2) comprises an external annular flange provided with holes for securing to a corresponding flange of a valve.

9. Cleaning bell (1) according to any one of claims 1 to 8, wherein said cleaning accessories (10) supported by said operating rod (7) comprise a brush and/or a magnet.

10. **Valve** (20) for tubular pipes comprising:
- a valve body wherein a shutter seat is obtained which identifies a passage for fluids;
- a shutter interlocked in closing and opening to said shutter seat;
- a fitting (21) projecting from said body and in fluid communication with said shutter seat, said fitting (21) being designed to be tightly secured to a tubular pipe (30) of a fluid transport and/or distribution network and
- a cleaning bell applied in a fluid-tight manner to said valve body and in fluid communication with said shutter seat, wherein said cleaning bell is a cleaning bell in accordance with any one of claims 1 to 9.

11. Valve (20) according to claim 10, wherein the fluid passage identified by said shutter seat and said fitting (21) are positioned so as to be aligned with the axis (X-X) of said operating rod of said bell (1) to allow the insertion through said passage of fluids and through said fitting (21) of said operating rod (7) and of the cleaning accessories (10) supported when said shutter is in the open position with respect to said shutter seat and said operating rod is in said forward position.

12. **Tubular pipe** (30) of a fluid transport and/or distribution network, comprising a valve in accordance with claim 10 or 11 applied sealingly to a portion of the side wall of said tubular pipe.

## Patentansprüche

1. **Reinigungsglocke** (1) zum Entfernen von Abfällen aus Rohrleitungen zum Transport und/oder zur Verteilung von Flüssigkeiten, wobei:
- die Reinigungsglocke (1) einen glockenförmigen Körper (2) umfasst, der einen inneren Hohlraum (3) umfasst, der durch Seitenwände begrenzt ist, die sich in einer axialen Richtung (X-X) zwischen gegenüberliegenden Kopfenden (4, 5) erstrecken;
- ein erstes Kopfende (4) des glockenförmigen Körpers (2) offen ist und dazu bestimmt ist, bei Verwendung in abgedichteter Weise mit einem entsprechenden Abschnitt des Körpers eines Ventils (20) an den Verschlussmitteln des Ventils lösbar verbunden zu werden;
- ein zweites Kopfende (5) des glockenförmigen Körpers (2) durch eine Kopfwand (5), die einen Durchgang (6) aufweist; verschlossen wird;
- die Reinigungsglocke (1) auch eine Betätigungsstange (7) aufweisend einen Schaft (8) umfasst, der gleitend in den Durchgang (6) eingesetzt ist, wobei Dichtungsmittel dazwischen angeordnet sind, die eingerichtet sind, das Gleiten des Schafts (8) in Bezug auf das zweite Kopfende (5) des glockenförmigen Körpers (2) zu ermöglichen, um eine Flüssigkeitsdruckdichtung zu gewährleisten;
- die Reinigungsglocke (1) Reinigungszubehöre (10) umfasst, die durch ein erstes Ende (7a) der Betätigungsstange (7) getragen wird, und
- die Reinigungsglocke (1) Greifmittel (11) umfasst, die mit einem Punkt des Schafts (8) der Betätigungsstange (7) verbunden sind, der von dem ersten Ende (7a) entfernt ist, um die Betätigungsstange (7) von außen des glockenförmigen Körpers (2) zu bewegen,
wobei die Betätigungsstange (7) manuell betätigt werden kann, um reversibel zu schalten:
• aus einer rückwärtigen Hubendestellung, in der das erste Ende (7a) in dem inneren Hohlraum (3) des glockenförmigen Körpers (2) positioniert ist und die Greifmittel (11) sich in dem Maximalabstand von dem zweiten Endkopf (5) des glockenförmigen Körpers (2) befinden
• in eine vorgeschobene Stellung, in der das erste Ende (7a) das erste Kopfende (4) des glockenförmigen Körpers (2) überwindet und die Greifmittel (11) sich näher an dem zweiten Kopfende (5) des glockenförmigen Körpers (2) befinden,
**dadurch gekennzeichnet, dass:**
- die Reinigungsglocke (1) einen Pneumatikzylinder (12) umfasst, der einen ersten Teil (13) und einen zweiten Teil (14) umfasst, die gegenseitig entlang einer vorbestimmten axialen Richtung (YY) gleitend miteinander gekoppelt sind, um von einer Stellung mit zusammengezogenem Hubende in eine Stellung mit ausgefahrenem Hubende reversibel zu wechseln, wobei gegenüberliegende und jeweilige freie Enden des ersten Teils (13) und des zweiten Teils (14) näher nebeneinander liegen und, bzw., weiter voneinander entfernt werden;
- der Pneumatikzylinder (12) mit einer kompressiblen Flüssigkeit beaufschlagt wird, die zwischen dem ersten Teil (13) und dem zweiten Teil (14) wirkt, um den ersten Teil (13) und den zweiten Teil (14) mit einer vorbestimmten elastischen Last in die rückwärtige Hubendestellung zu schieben, in der sich die gegenüberliegenden freien Enden des ersten Teils (13) und des zweiten Teils (14) des Pneumatikzylinders (12) in einem Mindestabstand voneinander befinden;
- der erste Teil (13) des pneumatischen Zylinders (12) durch eine Verbindung (16) an der Außenseite des glockenförmigen Körpers (2) befestigt ist und
- die Reinigungsglocke (1) lösbare Eingriffsmittel (15) umfasst, um den zweiten Teil (14) des Pneumatikzylinders (12) an einen Abschnitt des Schafts (8) der Betätigungsstange (7) in Verschiebung zu zwingen, der von dem Durchgang (6) zur Außenseite des glockenförmigen Körpers (2) vorsteht,
so dass, wenn sich die Betätigungsstange (7) in der vorderen Stellung befindet und der zweite Teil (14) des Pneumatikzylinders (12) an der Betätigungsstange (7) befestigt ist, der Pneumatikzylinder (12) mit einer vorbestimmten Last elastisch einer Verschiebung der Betätigungsstange (7) aus der vorderen Stellung in Richtung der hinteren Endestellung entgegenwirkt.

2. Reinigungsglocke (1) nach Anspruch 1, wobei die lösbaren Eingriffsmittel (15) eine Klammer umfassen, die auf den Schaft (8) der Betätigungsstange geschraubt werden kann.

3. Reinigungsglocke (1) nach Anspruch 1 oder 2, wobei die lösbaren Eingriffsmittel (15) ermöglichen, dass die Betätigungsstange (7) um ihre eigene Achse (X-X) in Bezug auf den Glockenkörper (2) drehen kann.

4. Reinigungsglocke (1) nach einem der Ansprüche 1 bis 3, wobei die Verbindungsmittel (16) eine Verbindung zwischen einem Kopfende des ersten Teils (13) des Pneumatikzylinders (12) und der Kopfwand (5) des glockenförmigen Körpers (2) herstellen.

5. Reinigungsglocke (1) nach einem der Ansprüche 1 bis 4, wobei die Verbindungsmittel (16) eine gelenkige Verbindung zwischen dem ersten Teil (13) des Pneumatikzylinders (12) und dem Glockenkörper (2) herstellen, um dem Pneumatikzylinder (12) zu ermöglichen, sich in Bezug auf den glockenförmigen Körper (2) zu neigen, um den Neigungen/Schwingungen zu folgen, die dem Schaft (8) der Betätigungsstange (7) übertragen werden.

6. Reinigungsglocke (1) nach Anspruch 4 und 5, wobei die Verbindungsmittel (16) eine Gabel umfassend einen an der Kopfwand (5) befestigten Boden und zwei einander zugewandten Laschen zum Stützen eines vom Kopfende des ersten Teils (13) des Pneumatikzylinders (12) vorstehenden Drehbolzens umfassen, wobei der Drehbolzen durch die Gabelrippen und/oder durch das Kopfende des ersten Teils (13) des Pneumatikzylinders (12) frei drehbar gestützt wird.

7. Reinigungsglocke (1) nach einem der Ansprüche 1 bis 6, wobei die Greifmittel (11) ein Querelement umfassen, das einstückig mit einem freien Ende des Schafts (8) verbunden ist.

8. Reinigungsglocke (1) nach einem der Ansprüche 1 bis 7, wobei das erste Kopfende (4) des glockenförmigen Körpers (2) einen äußeren ringförmigen Flansch aufweist, der mit Bohrungen zur Befestigung an einem entsprechenden Flansch eines Ventils versehen ist.

9. Reinigungsglocke (1) nach einem der Ansprüche 1 bis 8, wobei die von der Betätigungsstange (7) getragenen Reinigungszubehör (10) eine Bürste und/oder einen Magneten umfassen.

10. **Ventil** (20) für Rohrleitungen, umfassend:
- einen Ventilkörper, wobei ein Verschlusssitz erreicht wird, der einen Durchgang für Flüssigkeiten identifiziert;
- einen Verschluss, der beim Schließen und Öffnen mit dem Verschlusssitz verbunden ist;
- ein Anschluss (21), der aus dem Körper vorsteht und in Fluidverbindung mit dem Verschlusssitz steht, wobei der Anschluss (21) so ausgelegt ist, dass er fest an einer Rohrleitung (30) eines Flüssigkeitstransport- und/oder - Verteilungsnetzes befestigt werden kann, und
- eine Reinigungsglocke, die fluiddicht an dem Ventilkörper angebracht ist und in Fluidverbindung mit dem Verschlusssitz steht, wobei die Reinigungsglocke eine Reinigungsglocke nach einem der Ansprüche 1 bis 9 ist.

11. Ventil (20) nach Anspruch 10, wobei der Flüssigkeitsdurchgang, der durch den Verschlusssitz und den Anschluss (21) identifiziert ist, so positioniert ist, dass er mit der Achse (X-X) der Betätigungsstange der Glocke (1) ausgerichtet ist, um das Einführen durch den Flüssigkeitsdurchgang und durch den Anschluss (21) der Betätigungsstange (7) und der Reinigungszubehöre (10) zu ermöglichen, die, wenn sich der Verschluss in Bezug auf den Verschlusssitz in der offenen Stellung befindet und die Betätigungsstange in der vorderen Stellung ist, gestützt werden.

12. **Rohrleitung** (30) eines Flüssigkeitstransport- und/oder -Verteilungsnetzes, umfassend ein Ventil nach Anspruch 10 oder 11, das abdichtend an einem Abschnitt der Seitenwand der Rohrleitung angebracht ist.

## Revendications

1. **Cloche de nettoyage** (1) pour éliminer des débris à partir de conduits tubulaires pour le transport et/ou la distribution de fluides, dans laquelle :
- ladite cloche de nettoyage (1) comprend un corps en forme de cloche (2) comportant une cavité interne (3) délimitée par des parois latérales s'étendant dans une direction axiale (X-X) entre des extrémités de tête (4, 5) opposées;
- une première extrémité de tête (4) dudit corps en forme de cloche (2) est ouverte et est destinée, en utilisation, à être reliée de manière amovible d'une manière étanche à une portion correspondante du corps d'une valve (20) en correspondance avec des moyens formant clapet de ladite valve;
- une seconde extrémité de tête (5) dudit corps en forme de cloche (2) est fermée par une paroi de tête (5) comprenant un passage traversant (6);
- ladite cloche de nettoyage (1) comprend également une tige de commande (7) ayant un tronc (8) inséré de manière coulissante dans ledit passage traversant (6) avec l'interposition de moyens d'étanchéité appropriés pour permettre audit tronc (8) de coulisser par rapport à ladite seconde extrémité de tête (5) du corps en forme de cloche (2) en assurant une étanchéité à la pression d'un fluide;
- ladite cloche de nettoyage (1) comprend des accessoires de nettoyage (10) portés par une première extrémité (7a) de ladite tige de commande (7) et
- ladite cloche de nettoyage (1) comprend des moyens de préhension (11) reliés à un point du tronc (8) de ladite tige de commande (7) distal de ladite première extrémité (7a) pour déplacer ladite tige de commande (7) depuis l'extérieur dudit corps en forme de cloche (2),
dans laquelle ladite tige de commande (7) peut être actionnée manuellement pour basculer de manière réversible :
• d'une position de fin de course vers l'arrière dans laquelle ladite première extrémité (7a) est positionnée dans ladite cavité interne (3) dudit corps en forme de cloche (2) et lesdits moyens de préhension (11) sont à la distance maximale de ladite seconde tête d'extrémité (5) du corps de cloche (2)
• à une position avancée dans laquelle ladite première extrémité (7a) dépasse ladite première extrémité de tête (4) dudit corps en forme de cloche (2) et lesdits moyens de préhension (11) sont plus proches de ladite seconde extrémité de tête (5) dudit corps en forme de cloche (2),
**caractérisée en ce que:**
- ladite cloche de nettoyage (1) comprend un vérin pneumatique (12) comprenant une première partie (13) et une seconde partie (14) mutuellement couplées l'une à l'autre d'une manière coulissante le long d'une direction axiale prédéterminée (YY) pour basculer de manière réversible d'une position de fin de course contractée à une position de fin de course étendue dans laquelle des extrémités libres opposées et respectives de ladite première partie (13) et de ladite seconde partie (14) sont plus rapprochées et, respectivement, plus éloignées l'une de l'autre;
- ledit vérin pneumatique (12) est chargé avec un fluide compressible qui agit entre ladite première partie (13) et ladite seconde partie (14) pour pousser ladite première partie (13) et ladite seconde partie (14) avec une charge élastique prédéterminée dans ladite position de fin de course arrière dans laquelle les extrémités libres opposées de ladite première partie (13) et de ladite seconde partie (14) dudit vérin pneumatique (12) sont à une distance minimale l'une de l'autre;
- ladite première partie (13) dudit vérin pneumatique (12) est fixée au moyen d'une liaison (16) avec l'extérieur dudit corps en forme de cloche (2) et
- ladite cloche de nettoyage (1) comprend des moyens de mise en prise libérable (15) pour contraindre en translation ladite seconde partie (14) dudit vérin pneumatique (12) à une portion du tronc (8) de ladite tige de commande (7) faisant saillie à partir dudit passage traversant (6) vers l'extérieur dudit corps en forme de cloche (2),
de sorte que lorsque ladite tige de commande (7) est dans ladite position vers l'avant et ladite seconde partie (14) dudit vérin pneumatique (12) est contrainte à ladite tige de commande (7), ledit vérin pneumatique (12) s'oppose, avec une charge élastique prédéterminée, à un déplacement de ladite tige de commande (7) de ladite position avancée vers ladite position d'extrémité arrière.

2. Cloche de nettoyage (1) selon la revendication 1, dans laquelle lesdits moyens de mise en prise libérable (15) comprennent une pince qui peut être vissée sur le tronc (8) de ladite tige de commande.

3. Cloche de nettoyage (1) selon la revendication 1 ou 2, dans laquelle lesdits de mise en prise libérable (15) permettent à ladite tige de commande (7) d'être apte à tourner autour de son propre axe (X-X) par rapport au corps de cloche (2).

4. Cloche de nettoyage (1) selon l'une quelconque des revendications 1 à 3, dans laquelle lesdits moyens de liaison (16) établissent une liaison entre une extrémité de tête de ladite première partie (13) dudit vérin pneumatique (12) et ladite paroi de tête (5) dudit corps en forme de cloche (2).

5. Cloche de nettoyage (1) selon l'une quelconque des revendications 1 à 4, dans laquelle lesdits moyens de liaison (16) établissent une liaison articulée entre ladite première partie (13) dudit vérin pneumatique (12) et ledit corps de cloche (2), pour permettre audit vérin pneumatique (12) d'être apte à s'incliner par rapport audit corps en forme de cloche (2) pour suivre les inclinaisons/oscillations conférées au tronc (8) de ladite tige de commande (7).

6. Cloche de nettoyage (1) selon les revendications 4 et 5, dans laquelle lesdits moyens de liaison (16) comprennent une fourche comprenant une base fixée à ladite paroi de tête (5) et deux languettes en regard pour porter un arbre de rotation faisant saillie à partir de l'extrémité de tête de ladite première partie (13) dudit vérin pneumatique (12), dans laquelle ledit arbre de rotation est porté libre en rotation par lesdites ailettes de fourche et/ou par ladite extrémité de tête de ladite première partie (13) dudit vérin pneumatique (12).

7. Cloche de nettoyage (1) selon l'une quelconque des revendications 1 à 6, dans laquelle lesdits moyens de préhension (11) comprennent une traverse reliée d'un seul tenant à une extrémité libre dudit tronc (8).

8. Cloche de nettoyage (1) selon l'une quelconque des revendications 1 à 7, dans laquelle ladite première extrémité de tête (4) dudit corps en forme de cloche (2) comprend une bride annulaire externe munie de trous pour une fixation à une bride correspondante d'une vanne.

9. Cloche de nettoyage (1) selon l'une quelconque des revendications 1 à 8, dans laquelle lesdits accessoires de nettoyage (10) portés par ladite tige de commande (7) comprennent une brosse et/ou un aimant.

10. **Vanne** (20) pour conduits tubulaires comprenant :
- un corps de vanne dans lequel un siège de clapet est obtenu qui identifie un passage pour des fluides ;
- un clapet verrouillé en fermeture et en ouverture avec ledit siège de clapet;
- un raccord (21) faisant saillie à partir dudit corps et en communication fluidique avec ledit siège de clapet, ledit raccord (21) étant conçu pour être fermement fixé à un conduit tubulaire (30) d'un réseau de transport et/ou de distribution de fluide et
- une cloche de nettoyage appliquée d'une manière étanche aux fluides sur ledit corps de vanne et en communication fluidique avec ledit siège de clapet, dans laquelle ladite cloche de nettoyage est une cloche de nettoyage selon l'une quelconque des revendications 1 à 9.

11. Vanne (20) selon la revendication 10, dans laquelle le passage de fluide identifié par ledit siège de clapet et ledit raccord (21) sont positionnés de façon à être alignés avec l'axe (X-X) de ladite tige de commande de ladite cloche (1) pour permettre l'insertion à travers ledit passage de fluides et à travers ledit raccord (21) de ladite tige de commande (7) et des accessoires de nettoyage (10) portés lorsque ledit clapet est dans la position ouverte par rapport audit siège de clapet et ladite tige de commande est dans ladite position vers l'avant.

12. **Conduit tubulaire** (30) d'un réseau de transport et/ou de distribution de fluide, comprenant une vanne selon la revendication 10 ou 11 appliquée de manière étanche sur une portion de la paroi latérale dudit conduit tubulaire.
